(19) **Europäisches Patentamt / European Patent Office / Office européen des brevets**

(11) **EP 3 061 199 B1**

(12) **EUROPEAN PATENT SPECIFICATION**

(45) Date of publication and mention of the grant of the patent:
**04.03.2020 Bulletin 2020/10**

(21) Application number: **14856440.4**

(22) Date of filing: **17.09.2014**

(51) Int Cl.:
*H04B 7/26* (2006.01)    *H04W 72/12* (2009.01)
*H04L 5/14* (2006.01)    *H04W 8/08* (2009.01)
*H04W 28/02* (2009.01)    *H04W 36/00* (2009.01)
*H04W 64/00* (2009.01)    *H04W 72/04* (2009.01)
*H04L 1/16* (2006.01)    *H04M 11/04* (2006.01)
*H04W 76/00* (2018.01)    *H04W 84/12* (2009.01)
*H04W 88/06* (2009.01)    *H04L 29/06* (2006.01)
*H04L 12/841* (2013.01)

(86) International application number:
**PCT/US2014/056113**

(87) International publication number:
**WO 2015/060958 (30.04.2015 Gazette 2015/17)**

(54) **COVERAGE ENHANCEMENT AND SEMI-PERSISTENT SCHEDULING SUPPORT IN LTE-TDD SYSTEMS**

ABDECKUNGSVERSTÄRKUNG UND SEMIPERSISTENTE PLANUNGSUNTERSTÜTZUNG IN LTE-TDD-SYSTEMEN

AMÉLIORATION DE COUVERTURE ET SUPPORT DE PLANIFICATION SEMI-PERSISTANTE DANS DES SYSTÈMES LTE-TDD

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.10.2013 US 201361893792 P**
**25.07.2014 US 201414340639**

(43) Date of publication of application:
**31.08.2016 Bulletin 2016/35**

(73) Proprietor: **Intel IP Corporation**
**Santa Clara, CA 95054 (US)**

(72) Inventors:
• **KHORYAEV, Alexey**
**Nizhny Novgorod 603105 (RU)**
• **BASHAR, Shafi**
**Santa Clara, California 95054 (US)**
• **CHERVYAKOV, Andrey**
**Nizhny Novgorod 603006 (RU)**
• **FWU, Jong-Kae**
**Sunnyvale, California 94087 (US)**
• **HE, Hong**
**Beijing 100190 (CN)**

(74) Representative: **Withers & Rogers**
**Withers & Rogers LLP**
**4 More London Riverside**
**London SE1 2AU (GB)**

(56) References cited:
**KR-A- 20120 047 204**    **US-A1- 2011 310 777**
**US-A1- 2013 272 281**

• **ZTE: "Consideration on TTI Bundling Enhancements for TDD", 3GPP DRAFT; R1-134298 CONSIDERATION ON TTI BUNDLING ENHANCEMENTS FOR TDD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG1, no. Guangzhou, China; 20131007 - 20131011 28 September 2013 (2013-09-28), XP050717442, Retrieved from the Internet: URL:http://www.3gpp.org/ftp/tsg_ran/WG1_RL 1/TSGR1_74b/Docs/ [retrieved on 2013-09-28]**

EP 3 061 199 B1

- HUAWEI ET AL.: 'Discussion on TTI bundling extension for TDD' 3GPP TSG RA N WG1 MEETING#74 BIS, R1-134350 07 October 2013, GUANGZHOU, CHINA, XP050717492 Retrieved from the Internet: <URL:http://www.3gpp.org/ftp/tsg_ran/wg1_rl 1/TSGR1_74b/Docs>
- COOLPAD: 'Considerations on TTI bundling for TDD' 3GPP TSG RAN WG1 MEETIN G #74BIS, RL-134709 07 October 2013, GUANGZHOU, CHINA, XP050717772 Retrieved from the Internet: <URL:http://www.3gpp.org/ftp/tsg-ran/wg1_rl _/TSGR1_74b/Docs>
- ZTE: 'Consideration on TTI Bundling Enhancements for TDD' TSG-RAN WG1#74B IS, R1-134298 07 October 2013, GUANGZHOU, CHINA, XP050717442 Retrieved from the Internet: <URL:http://www,3gpp.org/ftp/tsg_ran/wg1_rl 1/TSGR1_74b/Docs>

**Description**

BACKGROUND

Long-Term Evolution (LTE) is a standard for wireless communication of data for mobile phones and data terminals. LTE is based on the Global System for Mobile Communications (GSM)/Enhanced Data Rates for GSM (EDGE) and Universal Mobile Telecommunications System (UMTS)/High Speed Packet Access (HSPA) network technologies, and may increase the capacity and speed, relative to these technologies, using a different radio interface together with core network improvements.

LTE communications may operate using Frequency Division Duplex (FDD) operation (LTE-FDD) and Time Division Duplex (TDD) operation (LTE-TDD). In LTE-TDD, data is transmitted over the radio interface using LTE "type 2" frames that may each be 10ms (milliseconds) in duration. Each frame may be divided into a number of subframes (e.g., 10 subframes, each being 1ms in duration) that can carry uplink data, downlink data, or control/synchronization information/signals.

Different LTE-TDD frames may have different uplink/downlink configurations, in which different configurations include a different arrangement of uplink, downlink, and special subframes. In the LTE 3rd Generation Partnership Project (3GPP) release 8 specification, seven different frame configurations are defined. The different frame configurations may be suited for different operational conditions. For example, in frame configuration five, 90% of the subframes are downlink subframes, and thus it may be desirable to use frame configuration number five in case of heavy downlink traffic conditions. In contrast, in frame configuration zero, 60% of the subframes are uplink subframes and thus it may be desirable to use frame configuration zero in case a large amount of uplink traffic.

The Transmission Time Interval (TTI) bundling mechanisms an LTE feature that may be particularly useful for improving coverage at cell edges or in poor radio conditions. In TTI bundling, different subframes may be associated ("bundled") with one another in a manner that facilitates more reliable reception and more efficient Hybrid Automatic Repeat Request (HARQ) error correction processing. TTI bundling may be used when transmitting subframes in the various LTE frame configurations.

US 2011/0310777 A1 shows a user uplink data scheduling method and user equipment, which are applied to multiple-periodicity mode semi-persistent scheduling supporting TTI bundling in the second Downlink/Uplink (DL/UL) timing interval proportion configuration mode TDD DL/UL subframe configuration 1) in a 3GPP LTE) TDD system. The user uplink data scheduling method includes the steps of: acquiring an indication message transmitted from a base station for indicating user uplink data based on the multiple-periodicity mode semi-persistent scheduling; setting a periodicity offset of the multiple-periodicity mode semi-persistent scheduling; determining the periodicities of the multiple-periodicity mode semi-persistent scheduling of per two adjacent TTI bundles according to the set offset; scheduling user uplink new transmission packet data according to the determined periodicities of the multiple-periodicity mode semi-persistent scheduling. The document claims to solve the problem that the new-transmission packet and the re-transmission packet of the same user of the multiple-periodicity semi-persistent scheduling conflict is solved, and that signal overhead is reduced when TTI bundling supports the VoIP service.

3GPP Tdoc. R1-134298, "Consideration on TTI Bundling Enhancements for TDD", TSG-RAN WG1 #74bis, October 2013, provides an illustration of the Rel-8 TTI bundling operations for TDD and considerations on TTI bundling enhancements for UL VoIP and medium data rate PUSCH are discussed. The document suggests specific combination of TTI bundling sizes and numbers of concurrent HARQ processes for different UL/DL configurations.

3GPP Tdoc. R1-134350, "Discussion on TTI bundling extension for TDD", TSG-RAN WG1 #74bis, October 2013, investigates what can be improved for each TDD UL/DL configuration, specifically on the increased number of bundling subframes and the time diversity for UL VoIP. For TDD UL/DL configuration 6, a 5 TTI bundling with 2 processes is considered to obtain 10 subframes for one packet within 50ms. The time diversity is said to be 17ms which is, according to the authors of the contribution, not large enough.

SUMMARY

The invention is defined by the subject matter of the independent claims. Advantageous embodiments are subject to the dependent claims.

BRIEF DESCRIPTION OF THE DRAWINGS

Embodiments of the present invention will be readily understood by the following detailed description in conjunction with the accompanying drawings. To facilitate this description, like reference numerals may designate like structural elements. Embodiments of the invention are illustrated by way of example and not by way of limitation in the figures of the accompanying drawings.

Fig. 1 is a diagram of an example environment in which systems and/or methods described herein may be implemented;
Fig. 2 is a diagram illustrating an example of a LTE-TDD radio frame;
Fig. 3 is a diagram illustrating standard uplink/downlink configurations;
Fig. 4 is an example of a timing diagram illustrating existing TTI bundling when using uplink/downlink configuration zero;

Fig. 5 is an example of a timing diagram illustrating existing TTI bundling when using uplink/downlink configuration six;

Figs. 6 - 14 are diagrams illustrating examples of TTI bundling technique consistent with aspects described herein;

Fig. 15 is a flowchart illustrating an example of a process relating to LTE-TDD communications; and

Fig. 16 is a diagram of example components of a device.

## DETAILED DESCRIPTION OF PREFERRED EMBODIMENTS

The following detailed description refers to the accompanying drawings. The same reference numbers in different drawings may identify the same or similar elements. It is to be understood that other embodiments may be utilized and structural or logical changes may be made without departing from the scope of the present disclosure. Therefore, the following detailed description is not to be taken in a limiting sense, and the scope of embodiments in accordance with the present invention is defined by the appended claims and their equivalents.

Techniques described herein relate to the specification and use of flexible TTI bundling sizes that result in efficient use of the radio spectrum in LTE-TDD communications. In one implementation, different uplink/downlink frame configurations may be associated with different TTI bundling sizes. The techniques described herein may be particularly applicable to Voice over Internet Protocol (VoIP) traffic. In some implementations, offset timing relating to HARQ processes Semi-Persistent Scheduling (SPS) may also be modified. Some implementations may allow for radio coverage to be improved by, for example, 1-2dB (decibels).

In one implementation, a User Equipment (UE) may include processing circuitry to connect with an evolved NodeB (eNodeB) associated with a Long Term Evolution (LTE) wireless network; generate packets relating to Voice over Internet Protocol (VoIP) communications; and transmit the generated packets, via a wireless interface with the eNodeB, as frames using LTE Time Division Duplex (LTE-TDD) communications. Each of the frames may include uplink data that is transmitted via Transmission Time Interval (TTI) bundles of a particular length, wherein a total number of uplink subframes corresponding to each of the packets is equal to a multiple of the particular length of the TTI bundles, and wherein Semi-Persistent Scheduling (SPS) is used to transmit control information relating to transmission of the frames.

Each of the packets may be generated to correspond to a fixed time period of voice data. The processing circuitry may be further to transmit the frames using LTE uplink/downlink configuration zero wherein: the particular length of the TTI bundles is three subframes and three concurrent Hybrid Automatic Repeat Request (HARQ) processes are used for the uplink data;the particular length of the TTI bundles is six subframes and two concurrent HARQ processes are used for the uplink data; the particular length of the TTI bundles is six subframes and three concurrent HARQ processes are used for the uplink data; or the particular length of the TTI bundles is twelve subframes and one concurrent HARQ process is used for the uplink data.

The processing circuitry may be further to transmit the frames using LTE uplink/downlink configuration six wherein: the particular length of the TTI bundles is five subframes and two concurrent HARQ processes are used for the uplink data; the particular length of the TTI bundles is five subframes and three concurrent HARQ processes are used for the uplink data; or the particular length of the TTI bundles is ten subframes and one concurrent HARQ process is used for the uplink data.

The processing circuitry may be further to transmit the frames using LTE uplink/downlink configuration three wherein: the particular length of the TTI bundles is three subframes and two concurrent HARQ processes are used for the uplink data; or the particular length of the TTI bundles is six subframes and one concurrent HARQ process is used for the uplink data.

The processing circuitry may be further to transmit the frames using LTE uplink/downlink configuration one wherein: the particular length of the TTI bundles is two subframes and four concurrent HARQ processes are used for the uplink data; the particular length of the TTI bundles is four subframes and three concurrent HARQ processes are used for the uplink data; or the particular length of the TTI bundles is eight subframes and one concurrent HARQ process is used for the uplink data.

In another implementation, a UE may include processing circuitry to: connect with an eNodeB associated with a LTE wireless network; generate VoIP data for transmission to the eNodeB; and transmit the VoIP data, to the eNodeB, using type 2 LTE-TDD frames to transmit the VoIP data in uplink subframes to the eNodeB, the uplink subframes being transmitted using SPS to transmit control information relating to transmission of the subframes.

When transmitting the VoIP data, the processing circuitry may be further to: transmit the VoIP data using HARQ error correction processing using TTI bundles of a particular length, wherein a total number of uplink subframes, corresponding to a packet, is equal to a multiple of the particular length of the TTI bundles.

In another implementation, an eNodeB may include processing circuitry to: wirelessly connect with UE using LTE-TDD communications; and receive, from the UE, frames relating to VoIP communications, the frames being received based on a particular uplink/downlink configuration, wherein uplink subframes of the received frames include HARQ error correction data that is transmitted in TTI bundles of a particular length, wherein a total number of uplink subframes corresponding to a packet of VoIP data is equal to a multiple of the particular length of the TTI bundles, and wherein SPS is used to transmit control information relating to the uplink subframes.

In another implementation, a method may include receiving, from a base station, a LTE-TDD uplink/downlink configuration setting; receiving, from the base station, an indication of a number of subframes to include in TTI bundles that are transmitted, to the base station, in uplink subframes that are transmitted according to the uplink/downlink configuration setting, wherein a total number of uplink subframes corresponding to a packet of VoIP data is equal to a multiple of the number of subframes to include in the TTI bundles; generating, by the mobile device, data to transmit using VoIP; and transmitting, by the mobile device and to the base station, the data using the uplink/downlink configuration setting and the number of subframes to include in the TTI bundles.

The method may further include receiving, from the base station, an indication of a periodicity to use with SPS when transmitting the voice data. When transmitting the voice data, the method may further include transmitting the voice data using HARQ error correction processing for the uplink subframes.

In another implementation, a device may include means for receiving LTE-TDD uplink/downlink configuration setting; means for receiving an indication of a number of subframes to include in TTI bundles that are transmitted, to the base station, in uplink subframes that are transmitted according to the uplink/downlink configuration setting, wherein a total number of uplink subframes corresponding to a packet of VoIP data is equal to a multiple of the number of subframes to include in the TTI bundles; means for generating data to transmit using VoIP; and means for transmitting, to the base station, the data using the uplink/downlink configuration setting and the number of subframes to include in the TTI bundles.

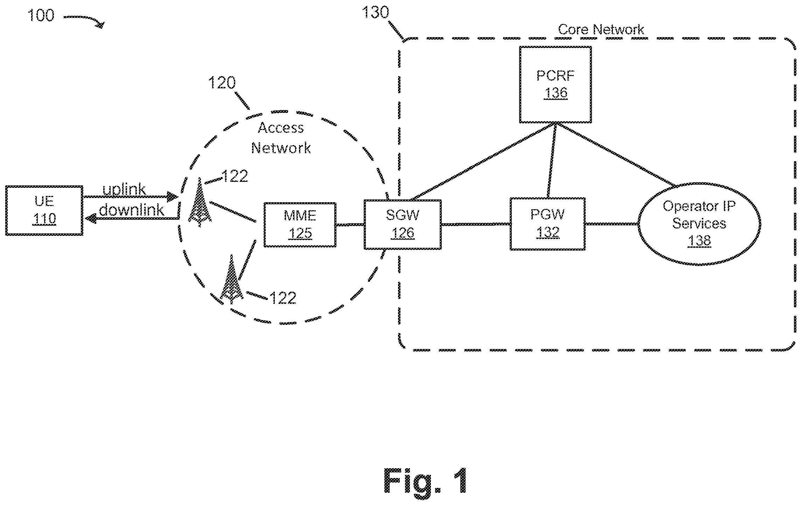

Fig. 1 is a diagram of an example environment 100 in which systems and/or methods described herein may be implemented. As illustrated, environment 100 may include User Equipment (UE) 110, which may obtain network connectivity through, for example, a cellular network. The cellular network may include access network 120 and core network 130. Access network 120 may be associated with a network operator that controls or otherwise manages core network 130. Core network 130 may include an Internet Protocol (IP)-based network, such as System Architecture Evolution (SAE) core network or a General Packet Radio Service (GPRS) core network.

UE 110 may include a portable computing and communication device, such as a personal digital assistant (PDA), a smart phone, a cellular phone, a laptop computer with connectivity to a cellular wireless network, a tablet computer, etc. UE 110 may also include non-portable computing devices, such as desktop computers, consumer or business appliances, or other devices that have the ability to wirelessly connect to access network 120.

Access network 120 may represent a 3GPP access network that includes one or more access technologies. Access network 120 may include base stations 122, mobility management entity (MME) 225, and serving gateway (SGW) 126. In the context of an LTE-based access network, base station 122 may be referred to as evolved NodeB (eNodeB) 122. As used herein and as illustrated in Fig. 1, the "uplink" direction may refer to data being transmitted by UE 110 and received by eNodeB 122. Similarly, the "downlink" direction may refer to data being transmitted by eNodeB 122 and received by UE 110.

ENodeBs 122 may each provide a radio interface over which the eNodeB may communicate with UE 110. The radio interface may include a radio interface that implements, for example, an Evolved Terrestrial Radio Access Network (E-UTRAN). ENodeBs 122 may communicate with UE 110 using LTE-TDD frames.

MME 125 may include one or more computation and communication devices that perform operations to register UE 110 with core network 130, establish bearer channels associated with a session with UE 110, hand off UE 110 from one eNodeB to another, and/or perform other operations. MME 125 may generally handle control plane traffic. SGW 126 may include one or more network devices that aggregate traffic received from one or more eNodeBs 122 and send the aggregated traffic to core network 130. SGW 126 may generally handle user (data) plane traffic.

Core network 130 may include an IP-based network. In the 3GPP network architecture, core network 130 may include an Evolved Packet Core (EPC). As illustrated, core network 130 may include packet data network gateway (PGW) 132, policy charging and rules function (PCRF) 136, and operator Internet Protocol (IP) services 138.

PGW 132 may include one or more devices that act as the point of interconnect between core network 130 and external IP networks and/or operator IP services 138. PGW 132 may route packets to and from the access networks and the external IP networks. PCRF 136 may operate in real-time to determine policy rules for the network. PCRF 146 may aggregate information to and from core network 130, operational support systems, and other sources. PCRF 136 may support the creation of rules and policy decisions for active subscribers.

Operator IP services 138 may represent one or more devices that provide services that are offered by the operator of core network 130. The services may include IP multimedia (IMS)-based services, transparent end-to-end packet-switched streaming services (PSSs), or other services.

The quantity of devices and/or networks, illustrated in Fig. 1, is provided for explanatory purposes only. In practice, there may be additional devices and/or networks; fewer devices and/or networks; different devices and/or networks; or differently arranged devices and/or networks than illustrated in Fig. 1. Alternatively, or additionally, one or more of the devices of environment 100 may perform one or more functions described as being performed by another one or more of the devices of environment 100.

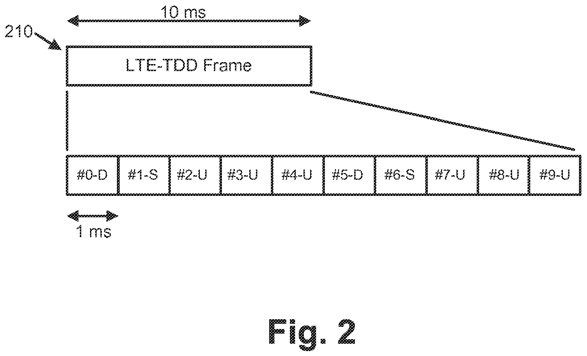

Fig. 2 is a diagram illustrating an example of a LTE-TDD radio frame. LTE-TDD frame 210 may include a 10ms frame divided into 10 subframes that are each 1ms in length, labeled as subframe #0 through subframe #9. The functionality associated with each subframe may vary based on the uplink/downlink configuration that is currently being used by UE 110 and eNodeB 122. Each subframe may generally be assigned to function as a downlink subframe (D), an uplink subframe (U), or a special subframe (S) that may be used to carry control and synchronization information. LTE-TDD frame 210 may represent uplink/downlink configuration zero, which, as illustrated, includes the following subframe assignments: #0-D, #1-S, #2-U, #3-U, #4-U, #5-D, #6-S, #7-U, #8-U, and #9-U.

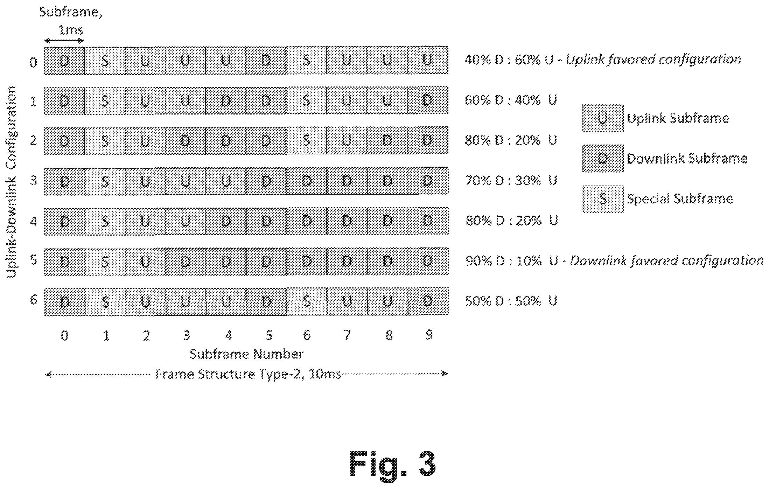

As previously mentioned, for LTE-TDD frames, a number of possible standard uplink/downlink configurations may be used to transmit frames between eNodeB 122 and mobile device 110. One example uplink/downlink configuration (configuration zero), is illustrated in Fig. 2. A complete set of the seven standard uplink/downlink configurations is illustrated in Fig. 3. As shown in Fig. 3, configuration zero includes six uplink subframes, two downlink subframes, and two special subframes; configuration one includes four uplink subframes, four downlink subframes, and two special subframes; configuration two includes two uplink subframes, six downlink subframes, and two special subframes; configuration three includes three uplink subframes, six downlink subframes, and one special subframes; configuration four includes two uplink subframes, seven downlink subframes, and one special subframe; configuration five includes one uplink subframe, eight downlink subframes, and one special subframe; and configuration six includes five uplink subframes, three downlink subframes, and two special subframes.

TTI bundling is a known technique to improve uplink coverage. With TTI bundling, several LTE subframes may be combined to form one narrow band allocation that may carry a single transport block, such as a VoIP packet. The narrow band transmission allows for the concentration of maximum power in a narrow part of the spectrum to potentially increase the power spectral density and improve the subcarrier signal-to-noise ratio (SNR). In the uplink/downlink standard configurations (Fig. 3), uplink/downlink configurations zero, one, and six support TTI bundling. However, even with these configurations, maximum coverage may not be achieved.

In existing LTE- TDD systems, TTI bundling may not be useable in conjunction with Semi-Persistent Scheduling (SPS) capabilities. SPS may be a fundamental mechanism for reducing control channel overhead for VoIP traffic that includes a constant data rate (e.g., in which VoIP packets arrive every 20ms during a talk spurt). Additionally, the TTI bundle size may be fixed at four TTI subframes (four consecutive uplink subframes per bundle). This constraint may result in less than full gain from energy accumulation in some of the uplink/downlink configurations, since the total amount of the available uplink subframes over a 20ms period (e.g., a VoIP packet arrival period) may not be a multiple of four. In this case, some VoIP packets may fail to benefit from the maximum possible number of TTI subframes.

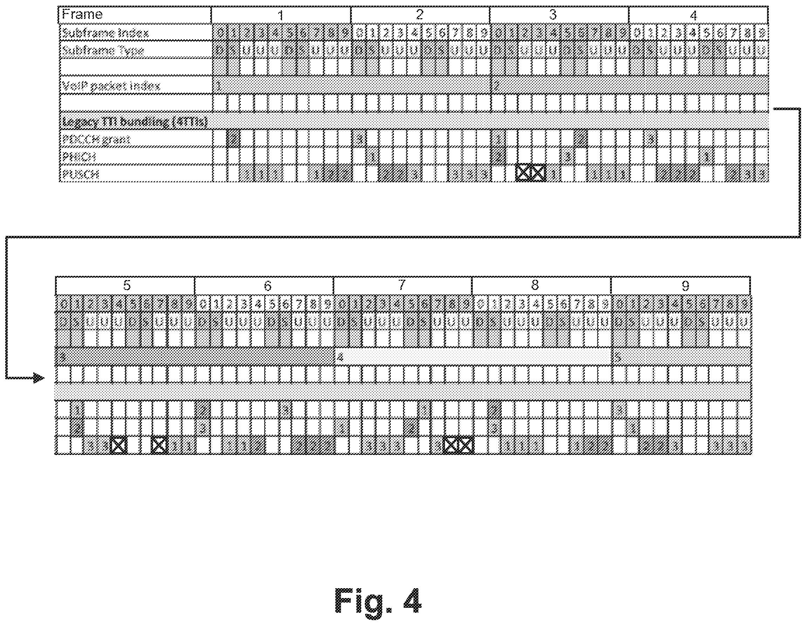

Fig. 4 is an example of a timing diagram illustrating existing TTI bundling when using uplink/downlink configuration zero. With TTI bundling, HARQ correction processing may be used. HARQ processing is an error correction process in which a receiver combines the contents of new data with previous (potentially erroneous) data to obtain an errorless version of the data. With HARQ, in the context of TTI bundling, each set of bundled subframes may include subframes that are part of a HARQ process. In the case of TTI bundling with HARQ processing, when using uplink/downlink configuration zero, the TTI bundling is implemented as bundles that include four subframes and in which three HARQ processes may be concurrently implemented.

As illustrated in Fig. 4, nine example frames (divided into ten subframes each) are illustrated. The "subframe type" row includes the type of each subframe and corresponds to uplink/downlink configuration zero (see Fig. 3). In this example, assume that VoIP packets are being transmitted from UE 110 to eNodeB 122. Each VoIP packet may correspond to approximately 20ms (i.e., a VoIP packet is generated every 20ms). Five VoIP packets are illustrated in Fig. 4 and are labeled as the row "VoIP packet index." As shown, the packet indexes have values from one to five (inclusive).

Additionally, in Fig. 4, "Physical Downlink Control Channel (PDCCH)" may refer to downlink control signaling and "PDCCH grant" may refer to downlink control signaling that is used to grant UE 110 permission to transmit. "Physical Hybrid-ARQ Indicator Channel (PHICH)" may refer to a downlink channel that carries HARQ acknowledgements (ACKS) or negative acknowledgements (NACK) for the uplink data transfers, and Physical Uplink Shared Channel (PUSCH) may refer to a shared channel that is used to transmit data of UE 110. In general, scheduling of data transmissions may be under the control of eNodeB 122. ENodeB 122 may use PDCCH signaling to inform UE 110 about resource block assignment, modulation and the coding scheme that is to be used.

As illustrated in Fig. 4, the numbers associated with various subframes, in the PDCCH grant row, may refer to a grant associated with a TTI bundle. The numbers associated with the various subframes in the PUSCH row may refer to the corresponding uplink transmission of the HARQ subframes in the TTI bundle. The numbers associated with the various subframes in the PHICH row may refer to ACKs/NACKs of the corresponding uplink transmission of the bundle.

In Fig. 4, the number one, two, and three (in the rows PDCCH grant, PHICH, and PUSCH) may indicate communications related to three different concurrent HARQ processes. Each HARQ process may include a PDCCH grant request, four subframes in which the TTI bundle is transmitted (in the PUSCH row), and an ACK/NACK subframe (in the PHICH row). The same label (e.g., one) may then be used to indicate the beginning of another HARQ process (i.e., an uplink transmission of data using TTI bundling and HARQ). For example, as illustrated, a PDCCH grant request may be received, from eNodeB 122, to transmit TTI bundle two (frame one, subframe one). Beginning in the next subframe, TTI bundle one may be transmitted by the UE (frame one, subframe two). TTI bundle one may be transmitted by the UE over the uplink subframes two, three, four, and seven (frame one, subframes two, three, four, and seven). At this point, TTI bundle two may begin to be transmitted by the UE (frame one, subframe eight). At the beginning of the next frame, a PDCCH grant may be issued by the eNodeB for TTI bundle three (frame two, subframe zero), and in the following subframe, acknowledgement of the reception of TTI bundle one may be transmitted by the eNodeB (frame two, subframe one). Further, TTI bundle two may be transmitted by the UE (frame one, subframes eight and nine; frame two, subframes two and three) and TTI bundle three may be transmitted (frame two; subframes four, seven, eight, nine).

Continuing with the example of Fig. 4, a grant request may be received to transmit TTI bundle one (frame three, subframe zero). However, due to timing constraints, subframes two and three of frame three may not be useable to transmit data and may be wasted (indicated with an "x"). The unused subframes may correspond to approximately 1.7 dB of underutilized coverage gain. More particularly, for VoIP packets with 20ms arrival rates, only eight out of a possible twelve subframes may be useable for a packet. This may result in coverage gain underutilization of $10*\log_{10}(12.0/8.0)$, which equals approximately 1.7 dB.

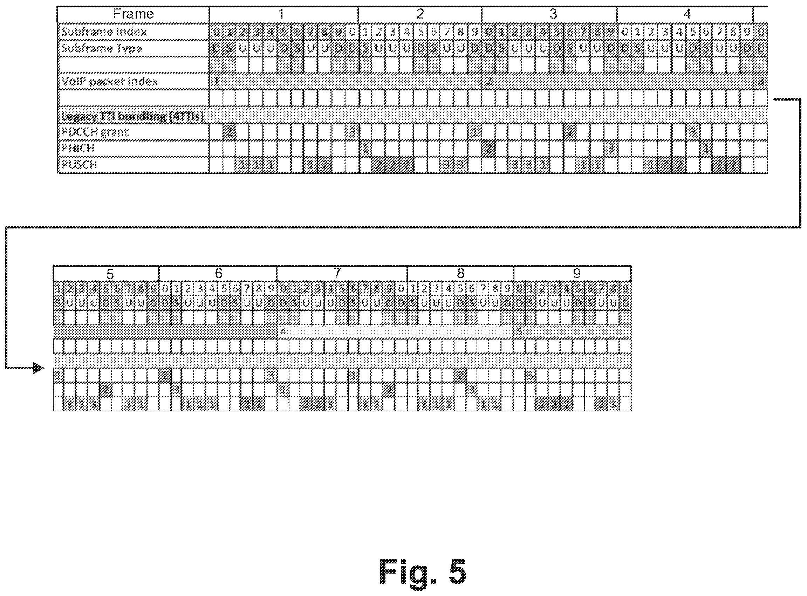

Fig. 5 is an example of a timing diagram illustrating conventional TTI bundling when using uplink/downlink configuration six. As with Fig. 4, assume that VoIP packets are being transmitted in which each packet corresponds to approximately 20ms of voice data. As illustrated, with uplink/downlink configuration six, approximately two four-subframe TTI bundles may be used to transmit each VoIP packet. For example, for the first three packets, seven complete TTI bundles (each having a length of four subframes) and the first half of another TTI bundle (frame six, subframes seven and eight) are illustrated as being transmitted. The resulting coverage loss, for the packets that use eight subframes (out of a possible ten), may thus be $10*\log_{10}(10.0/8.0)$, which equals approximately 1 dB.

Additionally, with respect to the description of Figs. 4 and 5, it can be appreciated that the existing LTE-TDD TTI bundling mechanism may not be useable jointly with semi-persistent scheduling because initial transmission of different VoIP packets can overlap with transmissions of TTI bundles. Dynamic scheduling may thus need to be used, which may cause additional control overhead for VoIP communication in TTI bundling mode.

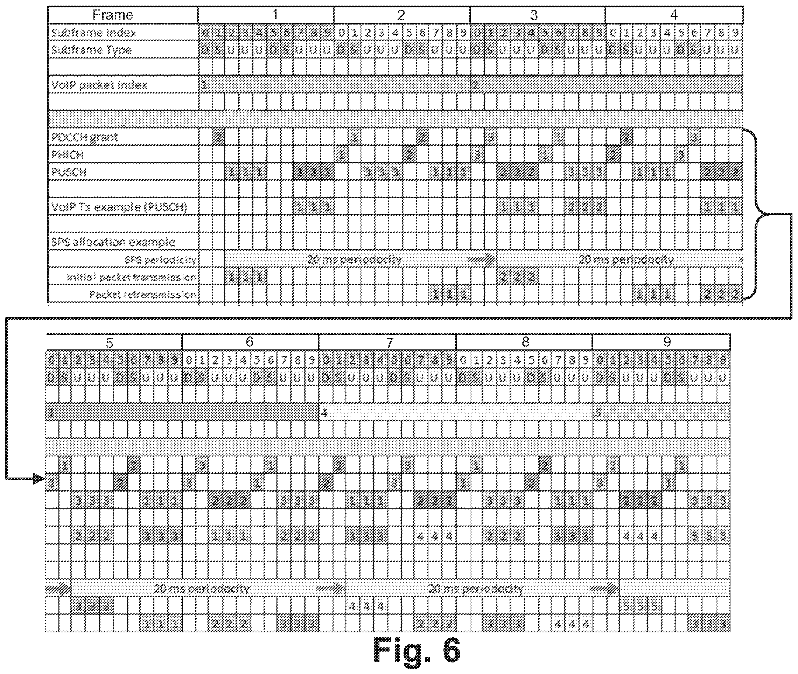

A number of TTI bundling techniques will next be described, with respect to Figs. 6-14, to improve coverage in the uplink/downlink configurations zero, one, three, and six.

Fig. 6 is a diagram illustrating one example of a TTI bundling technique consistent with aspects described herein. Fig. 6 may correspond to TTI bundling, for LTE-TDD uplink/downlink configuration zero, in which three subframes are used per-TTI bundle and three concurrent HARQ processes are implemented.

Nine frames are illustrated in Fig. 6. The labeled rows illustrated in Fig. 6 are similar to those shown in Figs. 4 and 5. Additionally, Fig. 6 includes a row illustrating an example of data transmitted in a VoIP example ("VoIP Tx example PUSCH"). As illustrated for the VoIP Tx example, numbers in the subframes may correspond to the VoIP packet index. For example, at frame one, subframe seven, transmission may begin for VoIP packet one. At frame three, subframe two, retransmission of packet one may begin and at frame three, subframe two, transmission of VoIP packet two may be performed.

Fig. 6 additionally includes a row indicating an example of SPS periodicity. During SPS, a periodicity value (e.g., 20ms) may be preconfigured. During each allocation corresponding to the periodicity value, certain settings, such as modulation and coding schemes, may remain fixed. Using SPS, as opposed to dynamic scheduling, may improve coverage by reducing control overhead communications that may be required for dynamic scheduling. Although a 20ms periodicity is illustrated in Fig. 6, for SPS scheduling, other values, such as values that are multiples of 20ms, could also be used.

In some situations, a VoIP packet bundle may need to be retransmitted (e.g., due to erroneous reception). Retransmission of some of the example VoIP packets are illustrated in Fig. 6 as "initial packet transmission" and "packet retransmission." For instance, as illustrated, VoIP packet one may be retransmitted beginning at frame two, subframe seven; frame four, subframe two; and frame five, subframe seven. In this example, the round trip time (RTT), measured from the beginning of packet transmission to the beginning of retransmission, may be 15ms.

With the TTI bundling arrangement illustrated in Fig. 6, four TTI bundles (each having a length of three subframes) may be transmitted every two frames (i.e., every 20ms). Because the TTI bundles occur periodically with respect to the VoIP packets (e.g., assuming a VoIP packet periodicity of 20ms), SPS may be used, which may increase coverage. Additionally, unlike the example illustrated in Fig. 4, the uplink subframes may be fully utilized.

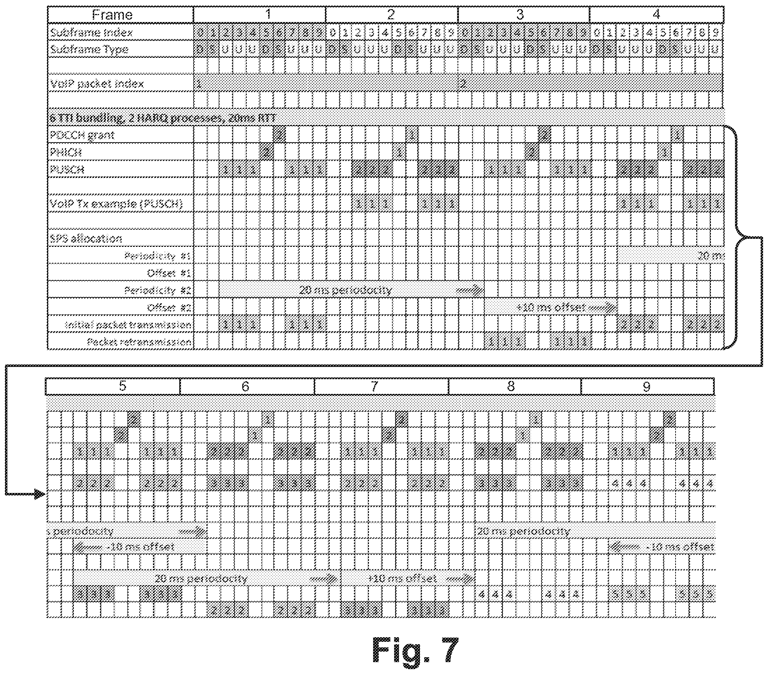

Fig. 7 is a diagram illustrating another example of a TTI bundling technique consistent with aspects described herein. Fig. 7 may correspond to TTI bundling, for LTE-TDD uplink/downlink configuration zero, in which six subframes are used per-TTI bundle, two concurrent HARQ processes are implemented, and the RTT, measured from the beginning of packet transmission to the beginning of retransmission, is 20ms. The SPS periodicity interval is illustrated as 20ms. The SPS periodicity could alternatively be set at other values that are multiples of 20ms.

In the implementation of Fig. 7, a constant 20ms SPS periodicity interval may cause collisions between retransmissions of a particular packet and initial transmission of the next packet after the particular packet. To avoid the collisions, a two-interval SPS pattern with an offset value of 10ms may be used. More particularly, beginning at the TTI bundling of the first HARQ process, the next SPS interval may be located at an interval T1 from the beginning of the corresponding TTI bundling. Beginning at the TTI bundling of the second HARQ process, the next SPS interval may be located at an interval T2 from the beginning of the corresponding TTI bundling. T1 and T2 may be repeated for subsequent SPS intervals. T1 and T2 may be determined as:

$$T1 = SPS\_Periodicity + subframe\_offset;$$

and

$$T2 = SPS\_Periodicity - subframe\_offset.$$

In Fig. 7, SPS_Periodicity is illustrated as 20ms and subframe_offset is illustrated as 10ms.

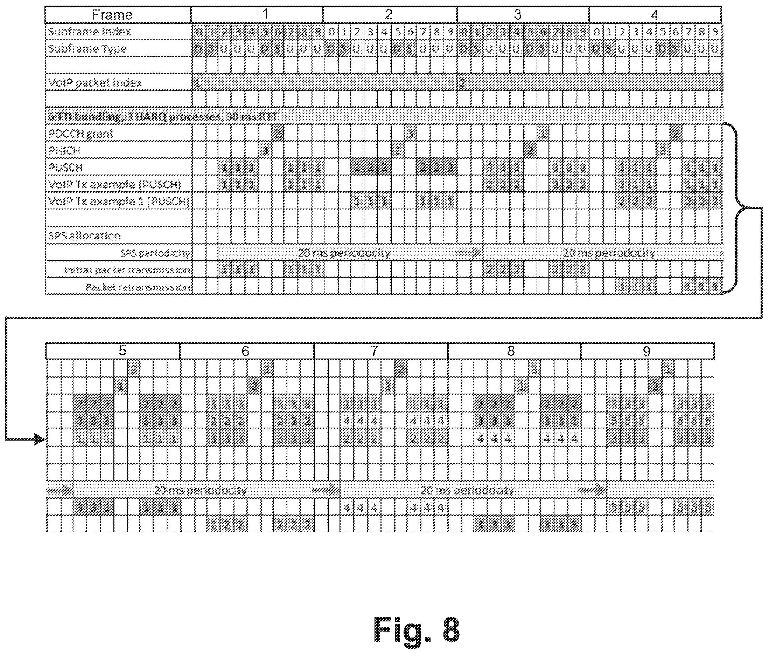

Fig. 8 is a diagram illustrating another example of a TTI bundling technique consistent with aspects described herein. Fig. 8 may correspond to TTI bundling, for LTE-TDD uplink/downlink configuration zero, in which six subframes are used per TTI bundle, three concurrent HARQ processes are implemented, and the RTT, measured from the beginning of packet transmission to the beginning of retransmission, is 30ms. The SPS periodicity interval is illustrated as 20ms. The SPS periodicity could alternatively be set at other values that are multiples of 20ms.

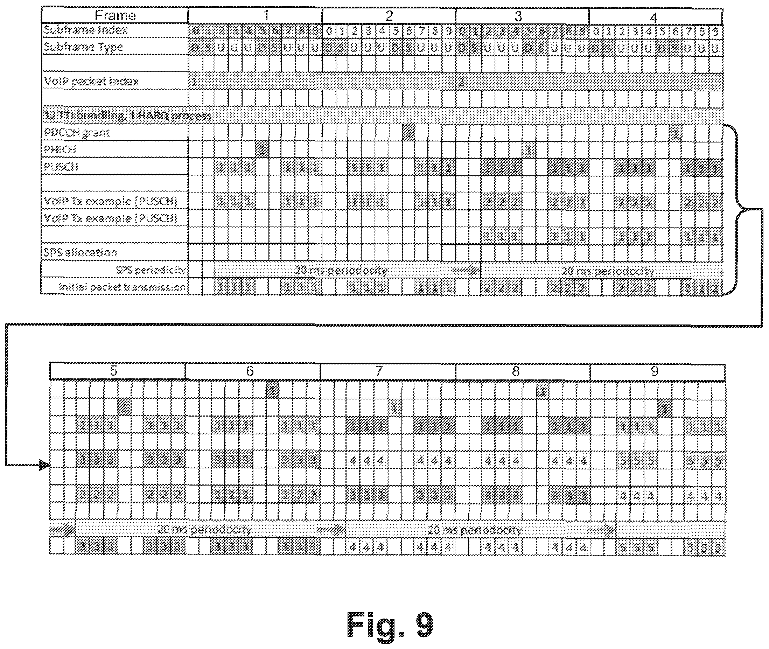

Fig. 9 is a diagram illustrating another example of a TTI bundling technique consistent with aspects described herein. Fig. 9 may correspond to TTI bundling, for LTE-TDD uplink/downlink configuration zero, in which twelve subframes are used per TTI bundle and one HARQ process is implemented. The SPS periodicity interval is illustrated as 20ms. The SPS periodicity could alternatively be set at other values that are multiples of 20ms.

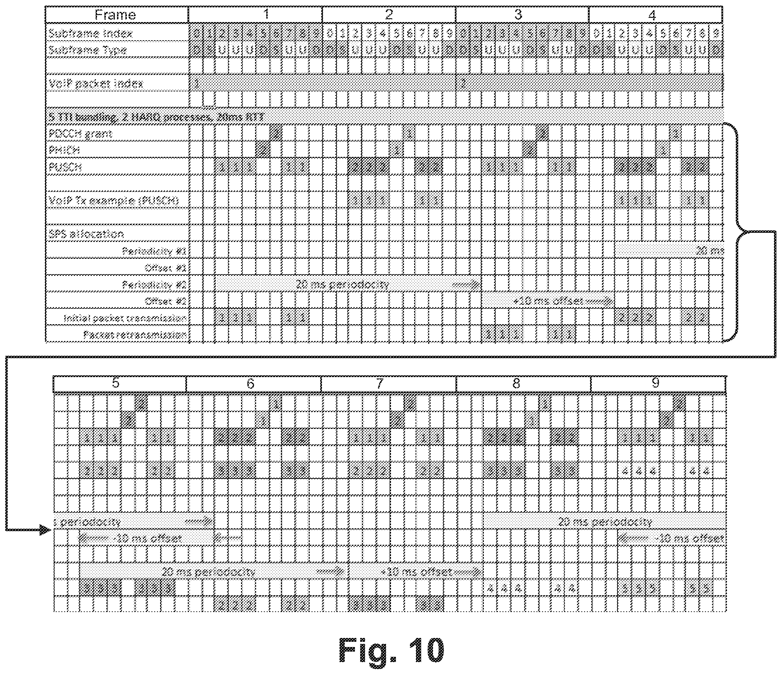

Fig. 10 is a diagram illustrating another example of a TTI bundling technique consistent with aspects described herein. Fig. 10 may correspond to TTI bundling, for LTE-TDD uplink/downlink configuration six, in which five subframes are used per TTI bundle, two concurrent HARQ processes are implemented, and the RTT, measured from the beginning of packet transmission to the beginning of retransmission, is 20ms. The SPS periodicity interval is illustrated as 20ms and may include a 10ms offset as discussed above with reference to Fig. 7. The SPS periodicity could alternatively be set at other values that are multiples of 20ms.

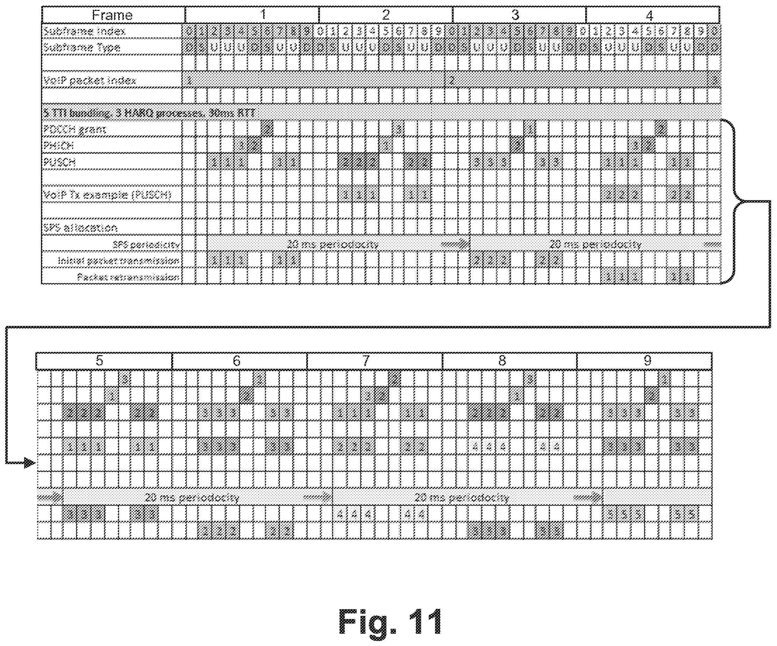

Fig. 11 is a diagram illustrating another example of a TTI bundling technique consistent with aspects described herein. Fig. 11 may correspond to TTI bundling, for LTE-TDD uplink/downlink configuration six, in which five subframes are used per TTI bundle, three concurrent HARQ processes are implemented, and the RTT, measured from the beginning of packet transmission to the beginning of retransmission, is 30ms. The SPS periodicity interval is illustrated as 20ms. The SPS periodicity could alternatively be set at other values that are multiples of 20ms.

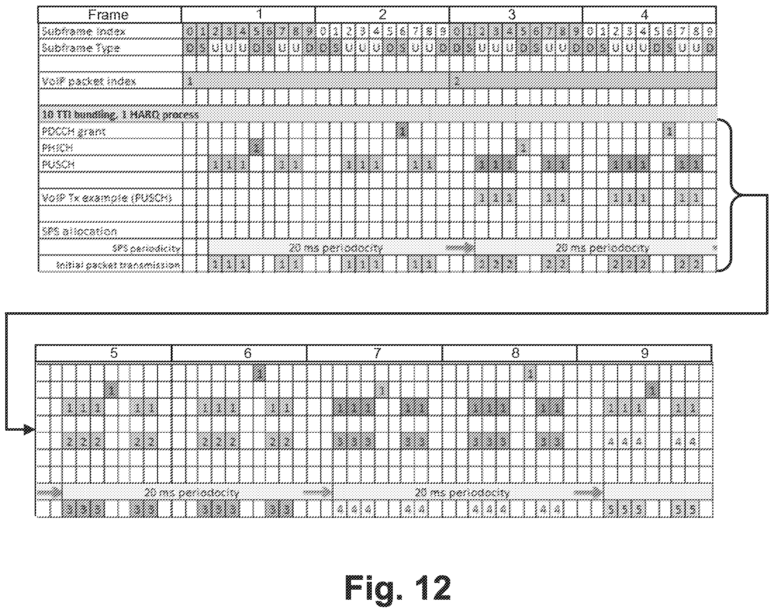

Fig. 12 is a diagram illustrating another example of a TTI bundling technique consistent with aspects described herein. Fig. 12 may correspond to TTI bundling, for LTE-TDD uplink/downlink configuration six, in which ten subframes are used per-TTI bundle along with one HARQ processes. The SPS periodicity interval is illustrated as 20ms. The SPS periodicity could alternatively be set at other values that are multiples of 20ms.

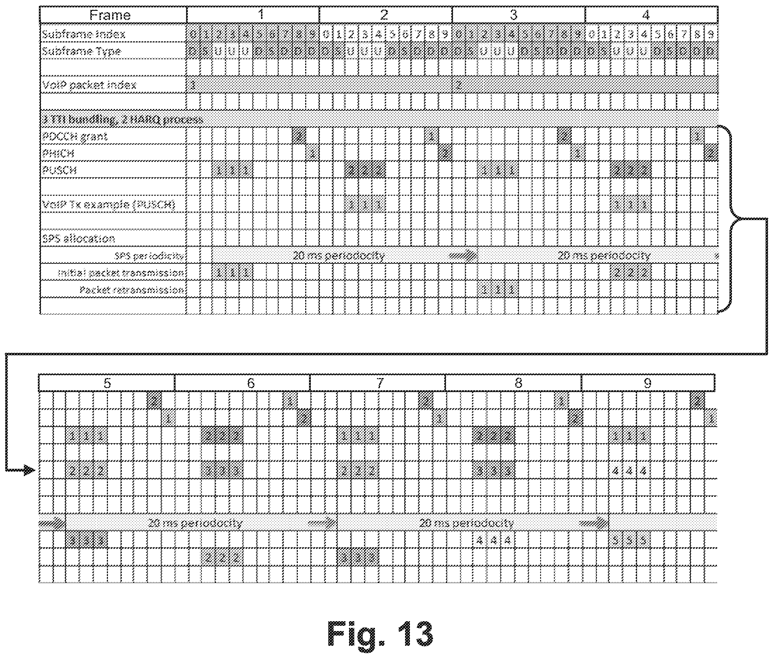

Fig. 13 is a diagram illustrating another example of a TTI bundling technique consistent with aspects described herein. Fig. 13 may correspond to TTI bundling, for LTE-TDD uplink/downlink configuration three, in which three subframes are used per-TTI bundle, two concurrent HARQ processes, and the RTT is 30ms. The SPS periodicity interval is illustrated as 20ms. The SPS periodicity could alternatively be set at other values that are multiples of 20ms.

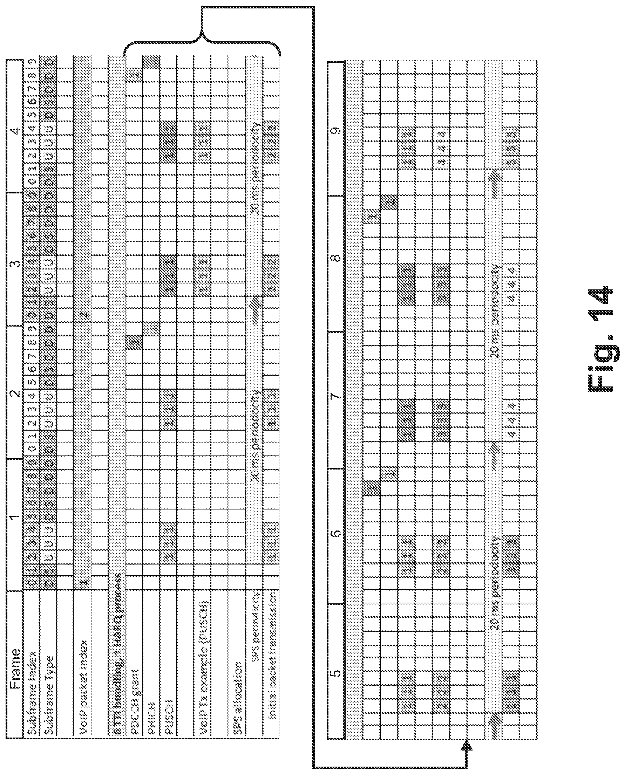

Fig. 14 is a diagram illustrating another example of a TTI bundling technique consistent with aspects described herein. Fig. 14 may correspond to TTI bundling, for LTE-TDD uplink/downlink configuration three, in which six subframes are used per-TTI bundle along with one concurrent HARQ processes. The SPS periodicity interval is illustrated as 20ms. The SPS periodicity could alternatively be set at other values that are multiples of 20ms.

In other implementations, other TTI bundling techniques, with other uplink/downlink configurations, may be used. For example, for uplink/downlink configuration one, the following configurations may be used to improve LTE-TDD coverage: (1) bundling of two TTIs, four concurrent HARQ processes, and the RTT is 15ms; (2) bundling of four TTIs, three concurrent HARQ processes, and the RTT is 30ms; and (3) bundling of eight TTIs and one HARQ process.

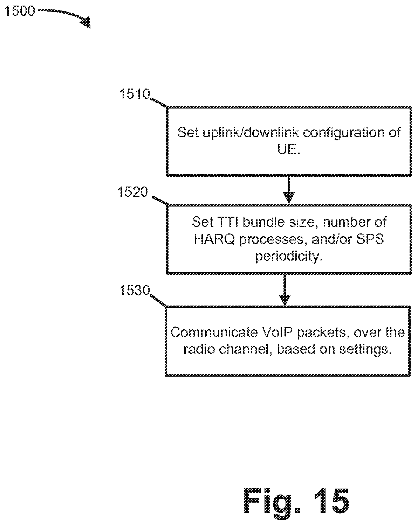

Fig. 15 is a flowchart illustrating an example of a process 1500 relating to LTE-TDD communications. Process 1500 may be performed by, for example, UE 110 and/or eNodeB 122.

Process 1500 may further include setting the uplink/downlink configuration for the UE (block 1510). In one implementation, the uplink/downlink configuration may be set by eNodeB 122 as part of the radio channel communication between UE 110 and eNodeB 122. For LTE-TDD, the possible uplink/downlink configurations may be illustrated in Fig. 3.

Process 1500 may further setting the TTI bundle size, number of HARQ processes, and/or the SPS periodicity interval (block 1520). In one implementation, the parameters to set may be dynamically configured by eNodeB 122. Alternatively or additionally, the parameters may be statically set in UE 110 and/or eNodeB 122. For example, for a given uplink/downlink configuration, UE 110 may be configured to perform uplink communications using TTI bundle sizes, HARQ processes, and SPS periodicity values that were statically configured in UE 110 or dynamically set, either during manufacture of UE 110 or during provisioning of UE 110. Alternatively or additionally, the settings (e.g., TTI bundle sizes, HARQ processes, and SPS periodicity) may be dynamically set during operation of UE 110 and/or eNodeB 122. The settings may be selected from one or more of the settings described above (e.g., with respect to the description of Figs. 6 - 14).

Process 1500 may further include communicating VoIP packets, over the radio channel, based on the settings (block 1530). As previously described, by communicating the VoIP packets, in the manner described, radio coverage may be efficiently implemented, due to efficient TTI bundling and the use of SPS.

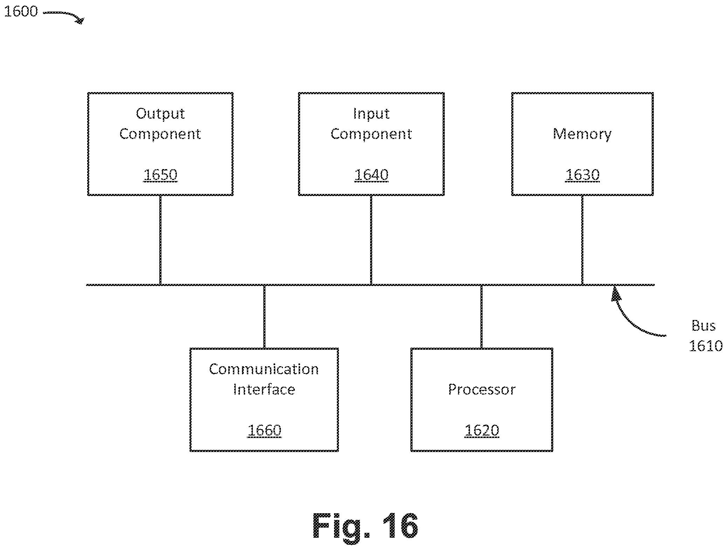

Fig. 16 is a diagram of example components of a device 1600. Each of the devices illustrated in Fig. 1 may include one or more devices 1600. Device 1600 may include bus 1610, processor 1620, memory 1630, input component 1640, output component 1650, and communication interface 1660. In another implementation, device 1600 may include additional, fewer, different, or differently arranged components.

Bus 1610 may include one or more communication paths that permit communication among the components of device 1600. Processor 1620 may include processing circuitry, such as a processor, microprocessor, or processing logic that may interpret and execute instructions. Memory 1630 may include any type of dynamic storage device that may store information and instructions for execution by processor 1620, and/or any type of non-volatile storage device that may store information for use by processor 1620.

Input component 1640 may include a mechanism that permits an operator to input information to device 1600, such as a keyboard, a keypad, a button, a switch, etc. Output component 1650 may include a mechanism that outputs information to the operator, such as a display, a speaker, one or more light emitting diodes (LEDs), etc.

Communication interface 1660 may include any transceiver-like mechanism that enables device 1600 to communicate with other devices and/or systems. For example, communication interface 1660 may include an Ethernet interface, an optical interface, a coaxial interface, or the like. Communication interface 1660 may include a wireless communication device, such as an infrared (IR) receiver, a Bluetooth® radio, a WiFi radio, a cellular radio, or the like. The wireless communication device may be coupled to an external device, such as a remote control, a wireless keyboard, a mobile telephone, etc. In some embodiments, device 1600 may include more than one communication interface 1660. For instance, device 1600 may include an optical interface and an Ethernet interface.

Device 1600 may perform certain operations described above. Device 1600 may perform these operations in response to processor 1620 executing software instructions stored in a computer-readable medium, such as memory 1630. A computer-readable medium may be defined as a non-transitory memory device. A memory device may include space within a single physical memory device or spread across multiple physical memory devices. The software instructions may be read into memory 1630 from another computer-readable medium or from another device. The software instructions stored in memory 1630 may cause processor 1620 to perform processes described herein. Alternatively, hardwired circuitry may be used in place of or in combination with software instructions to implement processes described herein. Thus, implementations described herein are not limited to any specific combination of hardware circuitry and software.

In the preceding specification, various embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

For example, while a series of blocks has been described with regard to Fig. 15, the order of the blocks may be modified in other implementations. Further, non-dependent blocks may be performed in parallel.

It will be apparent that example aspects, as described above, may be implemented in many different forms of software, firmware, and hardware in the implementations illustrated in the figures. The actual software code or specialized control hardware used to implement these aspects should not be construed as limiting. Thus, the operation and behavior of the aspects were described without reference to the specific software code--it being understood that software and control hardware could be designed to implement the aspects based on the description herein.

Further, certain portions of the invention may be implemented as "logic" that performs one or more functions. This logic may include hardware, such as an ASIC or a FPGA, or a combination of hardware and software.

No element, act, or instruction used in the present application should be construed as critical or essential unless explicitly described as such. An instance of the use of the term "and," as used herein, does not necessarily preclude the interpretation that the phrase "and/or" was intended in that instance. Similarly, an instance of the use of the term "or," as used herein, does not necessarily preclude the interpretation that the phrase "and/or" was intended in that instance. Also, as used herein, the article "a" is intended to include one or more items, and may be used interchangeably with the phrase "one or more." Where only one item is intended, the terms "one," "single," "only," or similar language is used. Further, the phrase "based on" is intended to mean "based, at least in part, on" unless explicitly stated otherwise.

**Claims**

1. A user equipment (110) comprising processing circuitry to:

   connect with an eNodeB (122) associated with a LTE wireless network;
   generate packets relating to VoIP communications; and
   transmit the generated packets, via a wireless interface with the eNodeB (122), as frames (210) using LTE-TDD communications, each of the frames (210) including uplink data that is transmitted via TTI bundles of a particular length,
   wherein Semi-Persistent Scheduling, SPS, is used to transmit control information relating to transmission of the frames (210);
   **characterized in that**
   the processing circuitry is further to transmit the frames (210) using LTE uplink/downlink configuration zero wherein:

      the particular length of the TTI bundles is three subframes and three concurrent HARQ processes are used for the uplink data,
      the particular length of the TTI bundles is six subframes and two concurrent HARQ processes are used for the uplink data, or
      the particular length of the TTI bundles is twelve subframes and one concurrent HARQ process is used for the uplink data; or

   the processing circuitry is further to transmit the frames (210) using LTE uplink/downlink configuration six wherein:
   the particular length of the TTI bundles is ten subframes and one concurrent HARQ process is used for the uplink data; or
the processing circuitry is further to transmit the frames (210) using LTE uplink/downlink configuration three wherein:

   the particular length of the TTI bundles is three subframes and two concurrent HARQ processes are used for the uplink data, or
   the particular length of the TTI bundles is six subframes and one concurrent HARQ process is used for the uplink data; or

the processing circuitry is further to transmit the frames (210) using LTE uplink/downlink configuration one wherein:

   the particular length of the TTI bundles is two subframes and four concurrent HARQ processes are used for the uplink data,
   the particular length of the TTI bundles is four subframes and three concurrent HARQ processes are used for the uplink data, or
   the particular length of the TTI bundles is eight subframes and one concurrent HARQ process is used for the uplink data.

2. The user equipment (110) of claim 1, wherein each of the packets are generated to correspond to a fixed time period of voice data.

3. An eNodeB (122) comprising processing circuitry to:

   wirelessly connect with A user equipment (110) using LTE-TDD communications; and
   receive, from the user equipment (110), frames (210) relating to VoIP communications, the frames (210) being received based on a particular uplink/downlink configuration,
   wherein uplink subframes of the received frames (210) include HARQ error correction data that is transmitted in TTI bundles of a particular length, and wherein Semi-Persistent Scheduling, SPS, is used to transmit control information relating to the uplink subframes;
   **characterized in that**
   the processing circuitry is further to transmit the frames (210) using LTE uplink/downlink configuration zero wherein:

      the particular length of the TTI bundles is three subframes and three concurrent HARQ processes are used,
      the particular length of the TTI bundles is six subframes and two concurrent HARQ processes are used, or
      the particular length of the TTI bundles is twelve subframes and one concurrent HARQ process is used; or

the processing circuitry is further to transmit the frames (210) using LTE uplink/downlink configuration six wherein:
the particular length of the TTI bundles is ten subframes and one concurrent HARQ process is used; or
the processing circuitry is further to transmit the frames (210) using LTE uplink/downlink configuration three wherein:

the particular length of the TTI bundles is three subframes and two concurrent HARQ processes are used, or
the particular length of the TTI bundles is six subframes and one concurrent HARQ process is used; or

the processing circuitry is further to transmit the frames (210) using LTE uplink/downlink configuration one wherein:

the particular length of the TTI bundles is two subframes and four concurrent HARQ processes are used,
the particular length of the TTI bundles is four subframes and three concurrent HARQ processes are used, or
the particular length of the TTI bundles is eight subframes and one concurrent HARQ process is used.

4. A method comprising:

receiving, by a mobile device and from a base station, a LTE-TDD uplink/downlink configuration setting;
receiving, by the mobile device and from the base station, an indication of a number of subframes to include in TTI bundles that are transmitted, to the base station, in uplink subframes that are transmitted according to the uplink/downlink configuration setting, wherein a total number of uplink subframes corresponding to a packet of VoIP data is equal to a multiple of the number of subframes to include in the TTI bundles;
generating, by the mobile device, data to transmit using VoIP; and
transmitting, by the mobile device and to the base station, the data using the uplink/downlink configuration setting and the number of subframes to include in the TTI bundles;
**characterized in that**
wherein the uplink/downlink configuration setting is set to configuration zero, and wherein:

the number of subframes for the TTI bundles is equal to three subframes and a number of concurrent HARQ processes is equal to three,
the number of subframes for the TTI bundles is equal to six subframes and a number of concurrent HARQ processes is equal to two, or
number of subframes for the TTI bundles is equal to twelve subframes and a number of concurrent HARQ processes is equal to one; or

wherein the uplink/downlink configuration setting is set to configuration six, and wherein:
the number of subframes for the TTI bundles is equal to ten and a number of concurrent HARQ processes is equal to one; or
wherein the uplink/downlink configuration setting is set to configuration three, and wherein:

the number of subframes for the TTI bundles is equal to three subframes and a number of concurrent HARQ processes is equal to two, or
the number of subframes for the TTI bundles is equal to six subframes and a number of concurrent HARQ processes is equal to one; or

wherein the uplink/downlink configuration setting is set to configuration one, and wherein:

the number of subframes for the TTI bundles is equal to two subframes and a number of concurrent HARQ processes is equal to four,
the number of subframes for the TTI bundles is equal to four subframes and a number of concurrent HARQ processes is equal to three, or
the number of subframes for the TTI bundles is equal to eight subframes and a number of concurrent HARQ processes is equal to one.

5. The method of claim 4, further comprising:
receiving, by the mobile device and from the base station, an indication of a periodicity to use with Semi-Persistent Scheduling, SPS, when transmitting the voice data.

6. The method of claim 4, wherein, when transmitting the voice data, the method further including:
transmitting the voice data using HARQ error correction processing for the uplink subframes.

**Patentansprüche**

1. Benutzerausrüstung (110), umfassend Verarbeitungsschaltungen zum:

   Verbinden mit einem eNodeB (122), assoziiert mit einem drahtlosen LTE-Netzwerk;
   Erzeugen von Paketen bezüglich VoIP-Kommunikationen; und
   Übertragen der erzeugten Pakete über eine drahtlose Schnittstelle mit dem eNodeB (122) als Rahmen (210) unter Verwendung von LTE-TDD-Kommunikationen, jeder der Rahmen (210) Uplink-Daten enthaltend, die über TTI-Bündel einer bestimmten Länge übertragen werden,
   wobei semipersistente Planung, SPS, verwendet wird, Steuerinformationen bezüglich der Übertragung der Rahmen (210) zu übertragen;
   **dadurch gekennzeichnet, dass**
   die Verarbeitungsschaltungen ferner die Rahmen (210) unter Verwendung einer LTE-Uplink-/Downlink-Konfiguration null übertragen sollen, wobei:

   die bestimmte Länge der TTI-Bündel drei Teilrahmen beträgt und drei gleichzeitige HARQ-Prozesse für die Uplink-Daten verwendet werden,
   die bestimmte Länge der TTI-Bündel sechs Teilrahmen beträgt und zwei gleichzeitige HARQ-Prozesse für die Uplink-Daten verwendet werden oder
   die bestimmte Länge der TTI-Bündel zwölf Teilrahmen beträgt und ein gleichzeitiger HARQ-Prozess für die Uplink-Daten verwendet wird; oder

   die Verarbeitungsschaltungen ferner die Rahmen (210) unter Verwendung einer LTE-Uplink-/Downlink-Konfiguration sechs übertragen sollen, wobei:

   die bestimmte Länge der TTI-Bündel zehn Teilrahmen beträgt und ein gleichzeitiger HARQ-Prozess für die Uplink-Daten verwendet wird; oder

   die Verarbeitungsschaltungen ferner die Rahmen (210) unter Verwendung einer LTE-Uplink-/Downlink-Konfiguration drei übertragen sollen, wobei:

   die bestimmte Länge der TTI-Bündel drei Teilrahmen beträgt und zwei gleichzeitige HARQ-Prozesse für die Uplink-Daten verwendet werden oder
   die bestimmte Länge der TTI-Bündel sechs Teilrahmen beträgt und ein gleichzeitiger HARQ-Prozess für die Uplink-Daten verwendet wird; oder

   die Verarbeitungsschaltungen ferner die Rahmen (210) unter Verwendung einer LTE-Uplink-/Downlink-Konfiguration eins übertragen sollen, wobei:

   die bestimmte Länge der TTI-Bündel zwei Teilrahmen beträgt und vier gleichzeitige HARQ-Prozesse für die Uplink-Daten verwendet werden,
   die bestimmte Länge der TTI-Bündel vier Teilrahmen beträgt und drei gleichzeitige HARQ-Prozesse für die Uplink-Daten verwendet werden oder
   die bestimmte Länge der TTI-Bündel acht Teilrahmen beträgt und ein gleichzeitiger HARQ-Prozess für die Uplink-Daten verwendet wird.

2. Benutzerausrüstung (110) nach Anspruch 1, wobei jedes der Pakete erzeugt wird, mit einer festen Zeitperiode von Sprachdaten zu korrespondieren.

3. eNodeB (122), umfassend Verarbeitungsschaltungen zum:

   drahtlosen Verbinden mit einer Benutzerausrüstung (110) unter Verwendung von LTE-TDD-Kommunikationen; und
   Empfangen, von der Benutzerausrüstung (110), von Rahmen (210) bezüglich VoIP-Kommunikationen, wobei die Rahmen (210) basierend auf einer bestimmten Uplink-/Downlink-Konfiguration empfangen werden,
   wobei Uplink-Teilrahmen der empfangenen Rahmen (210) HARQ-Fehlerkorrekturdaten enthalten, die in TTI-Bündeln einer bestimmten Länge übertragen werden, und wobei semipersistente Planung, SPS, verwendet wird, Steuerinformationen bezüglich der Uplink-Teilrahmen zu übertragen;
   **dadurch gekennzeichnet, dass**
   die Verarbeitungsschaltungen ferner die Rahmen (210) unter Verwendung einer LTE-Uplink-/Downlink-Konfiguration null übertragen sollen, wobei:

   die bestimmte Länge der TTI-Bündel drei Teilrahmen beträgt und drei gleichzeitige HARQ-Prozesse verwendet werden,
   die bestimmte Länge der TTI-Bündel sechs Teilrahmen beträgt und zwei gleichzeitige HARQ-Prozesse verwendet werden oder
   die bestimmte Länge der TTI-Bündel zwölf Teilrahmen beträgt und ein gleichzeitiger HARQ-Prozess verwendet wird; oder

die Verarbeitungsschaltungen ferner die Rahmen (210) unter Verwendung einer LTE-Uplink-/Downlink-Konfiguration sechs übertragen sollen, wobei:
die bestimmte Länge der TTI-Bündel zehn Teilrahmen beträgt und ein gleichzeitiger HARQ-Prozess verwendet wird; oder
die Verarbeitungsschaltungen ferner die Rahmen (210) unter Verwendung einer LTE-Uplink-/Downlink-Konfiguration drei übertragen sollen, wobei:

die bestimmte Länge der TTI-Bündel drei Teilrahmen beträgt und zwei gleichzeitige HARQ-Prozesse verwendet werden oder
die bestimmte Länge der TTI-Bündel sechs Teilrahmen beträgt und ein gleichzeitiger HARQ-Prozess verwendet wird; oder

die Verarbeitungsschaltungen ferner die Rahmen (210) unter Verwendung einer LTE-Uplink-/Downlink-Konfiguration eins übertragen sollen, wobei:

die bestimmte Länge der TTI-Bündel zwei Teilrahmen beträgt und vier gleichzeitige HARQ-Prozesse verwendet werden,
die bestimmte Länge der TTI-Bündel vier Teilrahmen beträgt und drei gleichzeitige HARQ-Prozesse verwendet werden oder
die bestimmte Länge der TTI-Bündel acht Teilrahmen beträgt und ein gleichzeitiger HARQ-Prozess verwendet wird.

4. Verfahren, umfassend:

Empfangen, durch eine Mobilvorrichtung und von einer Basisstation, einer LTE-TDD-Uplink-/Downlink-Konfigurationseinstellung;
Empfangen, durch die Mobilvorrichtung und von der Basisstation, einer Angabe einer Anzahl von Teilrahmen, die in TTI-Bündeln aufzunehmen sind, die in Uplink-Teilrahmen an die Basisstation übertragen werden, die gemäß der Uplink-/Downlink-Konfigurationseinstellung übertragen werden, wobei eine gesamte Anzahl von Uplink-Teilrahmen korrespondierend mit einem Paket von VoIP-Daten gleich einem Mehrfachen der Anzahl von Teilrahmen, die in die TTI-Bündel aufzunehmen sind, sind;
Erzeugen, durch die Mobilvorrichtung, von Daten zum Übertragen unter Verwendung von VoIP; und
Übertragen, durch die Mobilvorrichtung und an die Basisstation, der Daten unter Verwendung der Uplink-/Downlink-Konfigurationseinstellung und der Anzahl von Teilrahmen, die in die TTI-Bündel aufzunehmen sind;
**dadurch gekennzeichnet, dass**
wobei die Uplink-/Downlink-Konfigurationseinstellung auf eine Konfiguration null eingestellt ist und wobei:

die Anzahl von Teilrahmen für die TTI-Bündel gleich drei Teilrahmen ist und eine Anzahl von gleichzeitigen HARQ-Prozessen gleich drei ist,
die Anzahl von Teilrahmen für die TTI-Bündel gleich sechs Teilrahmen ist und eine Anzahl von gleichzeitigen HARQ-Prozessen gleich zwei ist oder
die Anzahl von Teilrahmen für die TTI-Bündel gleich zwölf Teilrahmen ist und eine Anzahl von gleichzeitigen HARQ-Prozessen gleich eins ist; oder

wobei die Uplink-/Downlink-Konfigurationseinstellung auf eine Konfiguration sechs eingestellt ist und wobei:
die Anzahl von Teilrahmen für die TTI-Bündel gleich zehn ist und eine Anzahl von gleichzeitigen HARQ-Prozessen gleich eins ist; oder
wobei die Uplink-/Downlink-Konfigurationseinstellung auf eine Konfiguration drei eingestellt ist und wobei:

die Anzahl von Teilrahmen für die TTI-Bündel gleich drei Teilrahmen ist und eine Anzahl von gleichzeitigen HARQ-Prozessen gleich zwei ist oder
die Anzahl von Teilrahmen für die TTI-Bündel gleich sechs Teilrahmen ist und eine Anzahl von gleichzeitigen HARQ-Prozessen gleich eins ist; oder

wobei die Uplink-/Downlink-Konfigurationseinstellung auf eine Konfiguration eins eingestellt ist und wobei:

die Anzahl von Teilrahmen für die TTI-Bündel gleich zwei Teilrahmen ist und eine Anzahl von gleichzeitigen HARQ-Prozessen gleich vier ist,
die Anzahl von Teilrahmen für die TTI-Bündel gleich vier Teilrahmen ist und eine Anzahl von gleichzeitigen HARQ-Prozessen gleich drei ist oder
die Anzahl von Teilrahmen für die TTI-Bündel gleich acht Teilrahmen ist und eine Anzahl von gleichzeitigen HARQ-Prozessen gleich eins ist.

5. Verfahren nach Anspruch 4, ferner umfassend:
Empfangen, durch die Mobilvorrichtung und von der Basisstation, einer Angabe einer Periodizität zur Verwendung mit semipersistenter Planung, SPS, beim Übertragen der Sprachdaten.

6. Verfahren nach Anspruch 4, wobei, wenn die Sprachdaten übertragen werden, das Verfahren ferner umfasst:
Übertragen der Sprachdaten unter Verwendung von HARC-Fehlerkorrekturverarbeitung für die Uplink-Teilrahmen.

**Revendications**

1. Equipement utilisateur (110) comprenant des circuits de traitement destinés à :

assurer la connexion avec un eNodeB (122) associé à un réseau sans fil LTE ;
générer des paquets relatifs à des communications VoIP ; et
transmettre les paquets générés, par l'intermédiaire d'une interface sans fil avec l'eNodeB (122), en tant que trames (210) au moyen de communications LTE-TDD, chacune des trames (210) comportant des données de liaison montante qui sont transmises par l'intermédiaire de groupes de TTI d'une longueur particulière, dans lequel un ordonnancement semi-permanent, SPS, est utilisé pour transmettre des informations de commande se rapportant à la transmission des trames (210) ;
**caractérisé en ce que**
les circuits de traitement servent en outre à transmettre les trames (210) en utilisant la configuration de liaison montante/liaison descendante LTE numéro zéro dans laquelle :

la longueur particulière des groupes de TTI est de trois sous-trames et trois processus HARQ simultanés sont utilisés pour les données de liaison montante,
la longueur particulière des groupes de TTI est de six sous-trames et deux processus HARQ simultanés sont utilisés pour les données de liaison montante, ou
la longueur particulière des groupes de TTI est de douze sous-trames et un seul processus HARQ simultané est utilisé pour les données de liaison montante ; ou

les circuits de traitement servent en outre à transmettre les trames (210) en utilisant la configuration de liaison montante/liaison descendante LTE numéro six dans laquelle :

la longueur particulière des groupes de TTI est de dix sous-trames et un seul processus HARQ simultané est utilisé pour les données de liaison montante ; ou
les circuits de traitement servent en outre à transmettre les trames (210) en utilisant la configuration de liaison montante/liaison descendante LTE numéro trois dans laquelle :

la longueur particulière des groupes de TTI est de trois sous-trames et deux processus HARQ simultanés sont utilisés pour les données de liaison montante, ou
la longueur particulière des groupes de TTI est de six sous-trames et un seul processus HARQ simultané est utilisé pour les données de liaison montante ; ou

les circuits de traitement servent en outre à transmettre les trames (210) en utilisant la configuration de liaison montante/liaison descendante LTE numéro un dans laquelle :

la longueur particulière des groupes de TTI est de deux sous-trames et quatre processus HARQ simultanés sont utilisés pour les données de liaison montante,
la longueur particulière des groupes de TTI est de quatre sous-trames et trois processus HARQ simultanés sont utilisés pour les données de liaison montante, ou
la longueur particulière des groupes de TTI est de huit sous-trames et un seul processus HARQ simultané est utilisé pour les données de liaison montante.

2. Equipement utilisateur (110) selon la revendication 1, dans lequel chacun des paquets est généré pour correspondre à une période de temps fixe de données vocales.

3. eNodeB (122) comprenant des circuits de traitement pour :

réaliser une connexion sans fil avec un équipement utilisateur (110) au moyen de communications LTE-TDD ; et
recevoir, depuis l'équipement utilisateur (110), des trames (210) relatives à des communications VoIP, les trames (210) étant reçues sur la base d'une configuration de liaison montante/liaison descendante particulière,
dans lequel des sous-trames de liaison montante des trames reçues (210) comportent des données de correction d'erreur HARQ qui sont transmises dans des groupes de TTI d'une longueur particulière, et dans lequel un ordonnancement semi-permanent, SPS, est utilisé pour transmettre des informations de commande relatives aux sous-trames de liaison montante ;
**caractérisé en ce que**
les circuits de traitement servent en outre à transmettre les trames (210) en utilisant la configuration de liaison montante/liaison descendante LTE numéro zéro dans laquelle :

> la longueur particulière des groupes de TTI est de trois sous-trames et trois processus HARQ simultanés sont utilisés,
> la longueur particulière des groupes de TTI est de six sous-trames et deux processus HARQ simultanés sont utilisés, ou
> la longueur particulière des groupes de TTI est de douze sous-trames et un seul processus HARQ simultané est utilisé ; ou

les circuits de traitement servent en outre à transmettre les trames (210) en utilisant la configuration de liaison montante/liaison descendante LTE numéro six dans laquelle:
la longueur particulière des groupes de TTI est de dix sous-trames et un seul processus HARQ simultané est utilisé ; ou
les circuits de traitement servent en outre à transmettre les trames (210) en utilisant la configuration de liaison montante/liaison descendante LTE numéro trois dans laquelle :

> la longueur particulière des groupes de TTI est de trois sous-trames et deux processus HARQ simultanés sont utilisés, ou
> la longueur particulière des groupes de TTI est de six sous-trames et un seul processus HARQ simultané est utilisé ; ou

les circuits de traitement servent en outre à transmettre les trames (210) en utilisant la configuration de liaison montante/liaison descendante LTE numéro un dans laquelle :

> la longueur particulière des groupes de TTI est de deux sous-trames et quatre processus HARQ simultanés sont utilisés,
> la longueur particulière des groupes de TTI est de quatre sous-trames et trois processus HARQ simultanés sont utilisés, ou
> la longueur particulière des groupes de TTI est de huit sous-trames et un seul processus HARQ simultané est utilisé.

4. Procédé comprenant :

> la réception, par un dispositif mobile et depuis une station de base, d'un réglage de configuration de liaison montante/liaison descendante LTE-TDD ;
la réception, par le dispositif mobile et depuis la station de base, d'une indication d'un nombre de sous-trames à inclure dans des groupes de TTI qui sont transmis, à la station de base, dans des sous-trames de liaison montante qui sont transmises conformément au réglage de configuration de liaison montante/liaison descendante, dans lequel un nombre total de sous-trames de liaison montante correspondant à un paquet de données VoIP est égal à un multiple du nombre de sous-trames à inclure dans les groupes de TTI ;
la génération, par le dispositif mobile, de données à transmettre selon le protocole VoIP ; et
la transmission, par le dispositif mobile et à la station de base, des données en utilisant le réglage de configuration de liaison montante/liaison descendante et le nombre de sous-trames à inclure dans les groupes de TTI ;
**caractérisé en ce que**
dans lequel le réglage de configuration de liaison montante/liaison descendante est posé à la configuration numéro zéro, et dans lequel :

> le nombre de sous-trames pour les groupes de TTI est égal à trois sous-trames et un nombre de processus HARQ simultanés est égal à trois,
> le nombre de sous-trames pour les groupes de TTI est égal à six sous-trames et un nombre de processus HARQ simultanés est égal à deux, ou
> le nombre de sous-trames pour les groupes de TTI est égal à douze sous-trames et un nombre de processus HARQ simultanés est égal à un ; ou

dans lequel le réglage de configuration de liaison montante/liaison descendante est posé à la configuration numéro six, et dans lequel :
le nombre de sous-trames pour les groupes de TTI est égal à dix et un nombre de processus HARQ simultanés est égal à un ; ou
dans lequel le réglage de configuration de liaison montante/liaison descendante est posé à la configuration numéro trois, et dans lequel :

> le nombre de sous-trames pour les groupes de TTI est égal à trois sous-trames et un nombre de processus HARQ simultanés est égal à deux, ou
> le nombre de sous-trames pour les groupes de TTI est égal à six sous-trames et un nombre de processus HARQ simultanés est égal à un ; ou

dans lequel le réglage de configuration de liaison montante/liaison descendante est posé à la configuration numéro un, et dans lequel :

le nombre de sous-trames pour les groupes de TTI est égal à deux sous-trames et un nombre de processus HARQ simultanés est égal à quatre,

le nombre de sous-trames pour les groupes de TTI est égal à quatre sous-trames et un nombre de processus HARQ simultanés est égal à trois, ou

le nombre de sous-trames pour les groupes de TTI est égal à huit sous-trames et un nombre de processus HARQ simultanés est égal à un.

5. Procédé selon la revendication 4, comprenant en outre :
la réception, par le dispositif mobile et depuis la station de base, d'une indication d'une périodicité à utiliser avec un ordonnancement semi-permanent, SPS, lors de la transmission des données vocales.

6. Procédé selon la revendication 4, le procédé comportant en outre, lors de la transmission des données vocales :
la transmission des données vocales en utilisant un traitement de correction d'erreur HARQ pour les sous-trames de liaison montante.

EP 3 061 199 B1

**Fig. 1**

EP 3 061 199 B1

10 ms

210

LTE-TDD Frame

| #0-D | #1-S | #2-U | #3-U | #4-U | #5-D | #6-S | #7-U | #8-U | #9-U |

1 ms

**Fig. 2**

EP 3 061 199 B1

Subframe,
1ms

| | 0 | 1 | 2 | 3 | 4 | 5 | 6 | 7 | 8 | 9 | |
|---|---|---|---|---|---|---|---|---|---|---|---|
| 0 | D | S | U | U | U | D | S | U | U | U | 40% D : 60% U - *Uplink favored configuration* |
| 1 | D | S | U | U | D | D | S | U | U | D | 60% D : 40% U |
| 2 | D | S | U | D | D | D | S | U | D | D | 80% D : 20% U |
| 3 | D | S | U | U | U | D | D | D | D | D | 70% D : 30% U |
| 4 | D | S | U | U | D | D | D | D | D | D | 80% D : 20% U |
| 5 | D | S | U | D | D | D | D | D | D | D | 90% D : 10% U - *Downlink favored configuration* |
| 6 | D | S | U | U | U | D | S | U | U | D | 50% D : 50% U |

Uplink-Downlink Configuration

0   1   2   3   4   5   6   7   8   9

Subframe Number

Frame Structure Type-2, 10ms

U | Uplink Subframe

D | Downlink Subframe

S | Special Subframe

# Fig. 3

Fig. 4

Fig. 5

**Fig. 6**

Fig. 7

Fig. 8

Fig. 9

Fig. 10

**Fig. 11**

**Fig. 12**

Fig. 13

**Fig. 14**

1500

1510 — Set uplink/downlink configuration of UE.

1520 — Set TTI bundle size, number of HARQ processes, and/or SPS periodicity.

1530 — Communicate VoIP packets, over the radio channel, based on settings.

# Fig. 15

Fig. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110310777 A1

**Non-patent literature cited in the description**

- Consideration on TTI Bundling Enhancements for TDD. *TSG-RAN WG1 #74bis,* October 2013

- Discussion on TTI bundling extension for TDD. *TSG-RAN WG1 #74bis,* October 2013